(19) **Europäisches Patentamt**
**European Patent Office**
**Office européen des brevets**

(11) **EP 2 205 384 B1**

(12) **EUROPÄISCHE PATENTSCHRIFT**

(45) Veröffentlichungstag und Bekanntmachung des Hinweises auf die Patenterteilung:
**22.02.2012 Patentblatt 2012/08**

(51) Int Cl.:
***B23B 31/00*** *(2006.01)*    ***B23B 31/12*** *(2006.01)*
***B25D 17/08*** *(2006.01)*

(21) Anmeldenummer: **08803495.4**

(22) Anmeldetag: **02.09.2008**

(86) Internationale Anmeldenummer:
**PCT/EP2008/061519**

(87) Internationale Veröffentlichungsnummer:
**WO 2009/049953 (23.04.2009 Gazette 2009/17)**

(54) **WERKZEUGSYSTEM**

TOOL SYSTEM

SYSTÈME D'OUTIL

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.10.2007 DE 102007048821**

(43) Veröffentlichungstag der Anmeldung:
**14.07.2010 Patentblatt 2010/28**

(73) Patentinhaber: **Robert Bosch GmbH**
**70442 Stuttgart (DE)**

(72) Erfinder: **BOHNE, Ulrich**
**72664 Kohlberg (DE)**

(56) Entgegenhaltungen:
**EP-A- 1 508 391    DE-A1- 10 206 164**
**DE-A1- 19 604 280    US-A- 3 982 846**

## Beschreibung

Die Erfindung betrifft ein Werkzeugsystem mit einem auswechselbaren Rotationswerkzeug für elektrische Handwerkzeugmaschinen, vorzugsweise mit Bohr- und/oder Hammerfunktion, nach Anspruchs 1.

## Stand der Technik

Werkzeugsysteme mit auswechselbaren Rotationswerkzeugen für elektrische Handwerkzeugmaschinen sind bekannt. So existieren beispielsweise Werkzeugsysteme zur Spannung in gebräuchlichen Dreibackenspannfuttern, wobei die Rotationswerkzeuge hierbei einen im Wesentlichen zylindrischen Schaft von mehr oder minder kreisförmigem Querschnitt aufweisen. Bei diesen Rotationswerkzeugen steht die Rotation des Werkzeugs im Vordergrund. Aus US 3,982,846 ist weiters eine Weiterentwicklung derartiger Werkzeugsysteme bekannt, wobei zu einer Verstärkung der Drehmitnnahme am Werkzeugschaft zwei Drehmitnahmeleisten vorgesehen sind. Daneben existieren Werkzeugsysteme, bei denen weniger die Rotationsbewegung, als vielmehr eine Schlagbewegung im Vordergrund steht, wie dies beispielsweise bei der SDS-Plus-Aufnahme der Fall ist. Hier ist insbesondere auch ein sehr leichtes Wechseln des Rotationswerkzeugs (beispielsweise eines Steinbohrers) erwünscht, weswegen die Einsetzschäfte von SDS-Plus-Bohrem eine besondere Geometrie aufweisen. Aus DE 196 04 280 A1 ist eine weitere Ausführung eines derartigen Werkzeugsystem bekannt, wobei zu einer Verstärkung der Drehmitnnahme am Werkzeugschaft mindestens eine Drehmitnahmeleiste und zwei Drehmitnahmenuten vorgesehen sind. Weiter existieren Werkzeugsysteme mit hexagonalem Querschnitt, wie sie beispielsweise bei Schrauber-Bits angetroffen werden. Allen diesen Werkzeugsystemen haftet gemeinsam der Nachteil an, dass sie jeweils nicht in der erwünschten Weise mit anderen Werkzeugsystemen hinreichend kompatibel sind, also ein Einsetzwerkzeug oder Rotationswerkzeug jeweils nur mit einer entsprechenden Aufnahme des zugehörigen Werkzeugsystems verbindbar ist, oder bei Verbinden mit einer Werkzeugaufnahme eines anderen Werkzeugsystems Einschränkungen bestehen. So ist es beispielsweise nicht möglich, SDS-Plus-Aufnahmen in Dreibackenspannfuttern einzuspannen, da in keiner Stellung eine zentrische Führungsmöglichkeit der drei Spannbacken für die besondere geometrische Ausgestaltung der SDS-Plus-Schäfte oder anderer, auf dem Markt befindlicher, für Schnellwechselsysteme geeigneter Schäfte besteht.

## Offenbarung der Erfindung

Aufgabe der Erfindung ist es, ein Werkzeugsystem mit einem auswechselbaren Rotationswerkzeug für elektrische Handwerkzeugmaschinen bereitzustellen, das die genannten Nachteile vermeidet und hierbei eine möglichst große Interoperabilität zwischen einzelnen Werkzeugsystemen, insbesondere zur Verwendung in verschiedenen Werkzeugaufnahmen von elektrischen Handwerkzeugmaschinen, ermöglicht.

Hierzu wir ein Werkzeugsystem mit einem auswechselbaren Rotationswerkzeug für elektrische Handwerkzeugmaschinen vorgeschlagen, vorzugsweise mit Bohr- und/oder Hammerfunktion, insbesondere für einen elektrischen Bohrhammer, und eine elektrische Bohrmaschine, insbesondere Schlagbohrmaschine, und mit mindestens zwei Werkzeughalterungen als Werkzeugaufnahmen, die den Handwerkzeugmaschinen zugeordnet und unterschiedlichen Typs sind, wobei das Rotationswerkzeug einen Einsetzschaft für die Aufnahme in der jeweiligen Werkzeughalterung der Handwerkzeugmaschinen aufweist, der mindestens zwei entlang seiner Längserstreckung verlaufende, einander diametral gegenüberliegende Mitnahmestege für eine Drehmitnahme aufweist, wobei die Werkzeugaufnahme als Formschlussaufnahme als ein erster Typ und eine weitere Werkzeugaufnahme als Dreibackenspannfutter als ein zweiter Typ ausgebildet sind und wobei die Mitnahmestege derart breit und derart hoch ausgebildet sind, dass sie - im eingespannten Zustand - von den Spannbacken des Dreibackenspannfutters einen seitlichen Abstand aufweisen. Maßgeblich für die Interoperabilität des Werkzeugsystems ist, dass die Mitnahmestege, die am Einsetzschaft des Rotationswerkzeugs ausgebildet sind, im eingespannten Zustand nicht mit den Spannbacken des Dreibackenspannfutters kollidieren. Der Einsetzschaft ist, damit er im Dreibackenspannfutter mit seinen um 120° winkelbeabstandet angeordneten drei Spannbacken zentrisch gespannt werden kann, von kreisförmigem Querschnitt. Die hieran ausgebildeten Mitnahmestege, die zur Drehmitnahme des Rotationswerkzeugs in dem anderen, ersten Typ der Werkzeugaufnahme, nämlich der Formschlussaufnahme, erforderlich sind, müssen so ausgebildet sein, dass sie die von den Spannbacken des Dreibackenspannfutters beanspruchte räumliche Ausdehnung beim Spannen, insbesondere im eingespannten Zustand, nicht ihrerseits beanspruchen. Hierdurch ist hinsichtlich ihrer Breite (im Wesentlichen also in ihrer Ausdehnung in Umfangsrichtung) und ihrer Höhe (also im Wesentlichen in ihrer Ausdehnung in Radialrichtung) eine Grenze gesetzt. Gleichzeitig müssen die Mitnahmestege ausreichend hoch und breit sein, um als Drehmitnahme im ersten Typ der Werkzeugaufnahme, nämlich der Formschlussaufnahme, eine ausreichende Momentübertragung zu gewährleisten. Für eine besonders gute Momentübertragung sind die Mitnahmestege diametral gegenüberliegend auf dem Umfang des Einsetzschafts des Rotationswerkzeugs angeordnet.

In einer weiteren Ausführung des Werkzeugsystems weist der Einsetzschaft genau zwei Mitnahmestege auf.

Zwar ist eine Ausbildung mit mehr als zwei Mitnahmestegen möglich, aber nicht erforderlich. Mit den beschriebenen, sich diametral gegenüberliegenden zwei Mitnahmestegen lässt sich eine Drehmomentübertragung in der erforderlichen Weise und im erforderlichen Umfang gewährleisten, wobei vermieden wird, dass weitere Mitnahmestege mit den Spannbacken des Dreibackenspannfutters kollidieren können.

In einer bevorzugten Ausführungsform weist der Mitnahmesteg einen im Wesentlichen quadratisch oder rechteckig ausgebildeten Stegquerschnitt auf. Hiermit ist gemeint, dass die Begrenzungsflächen der Mitnahmestege, die nicht auf dem Einsetzschaft beziehungsweise auf dem Umfang des Einsetzschafts liegen, zueinander rechte Winkel aufweisen und geradlinig ausgebildet sind. Der Querschnitt der Mitnahmestege ist an deren Anschluss an den Umfang des Einsetzschafts selbstverständlich dem Umfang, also dem kreisförmigen Querschnitt des Einsetzschafts, formangepasst und nicht gerade, während die übrigen Begrenzungslinien des Querschnitts des Mitnahmestegs gerade sind und untereinander rechte Winkel aufweisen.

In einer anderen Ausführungsform ist der Stegquerschnitt im Wesentlichen trapezförmig ausgebildet. Der Stegquerschnitt stellt sich hierbei im Wesentlichen als Trapez dar, wobei die kürzere Seite des Trapezes im oder am Querschnitt des Einsetzschaftes liegen kann, oder von diesem abgewandt.

In einer bevorzugten Ausführungsform ist vorgesehen, dass der Stegquerschnitt im Wesentlichen spiegelsymmetrisch zu einer als Verlängerung eines Radius des Einsetzschaftes gebildeten Symmetrieachse ist. Verlängert man den Radius des Kreisquerschnitts des Einsetzschaftes durch den Mitnahmesteg, so ergibt sich die Symmetrieachse, zu der der Querschnitt des Mitnahmestegs spiegelsymmetrisch ist. Links und rechts der Symmetrieachse als Spiegelachse, im Querschnitt betrachtet, weist der Stegquerschnitt spiegelbildlich dieselben Flächengehalte auf. Bei derart symmetrischer Ausbildung ist der Kraftangriff zur Momentübertragung in beiden Drehrichtungen des Rotationswerkzeugs gleich gut. Die symmetrische Ausbildung ist überdies kostengünstig und einfach herstellbar.

In einer weiteren Ausführungsform weisen die Mitnahmestege Längsseiten auf, die ebene Mitnahmeflanken bilden. Die Längsseiten der Mitnahmestege dienen der Momentübertragung durch die Werkzeugaufnahme des ersten Typs, nämlich der Formschlussaufnahme. Üblicherweise stellen derartige Werkzeugaufnahmen eine Axialsicherung bereit, und Führungsnuten, die der Aufnahme der Mitnahmestege dienen. In diesen Nuten greifen die Längsseiten der ebenen Mitnahmeflanken an, und übertragen das von der Werkzeugaufnahme übertragene Moment auf das Rotationswerkzeug. Die Ausbildung als ebene Mitnahmeflanken ist zur Momentübertragung besonders gut geeignet, da eine relativ großflächige, ebene Fläche zum Angriff der Werkzeugaufnahme ausgebildet ist; sie ist gleichzeitig leicht und günstig herstellbar.

In einer bevorzugten Ausführungsform des Werkzeugsystems verlaufen die Längsseiten jedes Mitnahmestegs parallel zueinander. Bei Parallelverlauf der Längsseiten jedes Mitnahmestegs erfolgt die Momentübertragung unabhängig von der Drehrichtung; es kann hiermit gewährleistet werden, dass die Momentübertragung in jede Drehrichtung in gleich guter Weise erfolgt. Abhängig von der Fertigungstechnik des Einsetzschaftes ist es möglich, dass die Längsseiten beziehungsweise Mitnahmestege in Radialrichtung an Oberseiten anschließen, die nicht eben sind; in diesem Fall wird zwischen den Längsseiten und der jeweiligen Oberseite nicht an allen Stellen ein oder auch gar kein rechter Winkel eingeschlossen, die Querschnittskontur der Mitnahmestege ist dann nicht rechteckig oder nur im wesentlichen rechteckig. Erfindungswesentlich ist hierbei allein, dass die Mitnahmeflanken in der entsprechenden Werkzeugaufnahme hinreichend geführt werden und einen hinreichenden Angriff für die Momentübertragung durch die Werkzeugaufnahme auf das Rotationswerkzeug bieten.

In einer weiteren bevorzugten Ausführungsform verlaufen die Längsseiten jedes Mitnahmesteges im Wesentlichen radial auf einer Umfangsmantelfläche des Einsetzschaftes. Diese Ausführungsform stellt eine Variante der trapezförmigen Ausbildung des Stegquerschnitts dar, wobei die Längsseiten als Seiten eines Trapezes ausgebildet sind, das mit seiner kürzeren Seite im Querschnitt des Einsetzschaftes oder auf diesem angeordnet ist, und wobei das Trapez spiegelsymmetrisch so ausgebildet ist, dass seine Trapezflanken parallel oder im Wesentlichen parallel zu dem Radius verlaufen oder auf einem Radius liegen, der durch die jeweils dem Querschnitt des Einsetzschaftes zugeordnete Trapezecke verläuft. Auf diese Weise lässt sich eine Momentübertragung der Drehbewegung auf das Rotationswerkzeug erreichen, bei der keine wesentliche Kräftezerlegung auftritt, sondern das Moment direkt auf einer radial gelegenen Ebene angreift.

In einer anderen bevorzugten Ausführungsform weist der Einsetzschaft einen kreisförmigen Querschnitt auf, der zumindest bereichsweise von den Mitnahmestegen überragt wird. Durch den kreisförmigen Querschnitt lässt sich der Einsetzschaft in Dreibackenspannfuttern problemlos einspannen, wobei bei bekannten Dreibackenspannfuttern die Spannbacken zueinander um 120° winkelbeabstandet angeordnet sind. Dies erlaubt eine bestimmte Lagefixierung in der Werkzeugaufnahme. Die Mitnahmestege überragen hierbei bereichsweise diesen kreisförmigen Querschnitt und dienen der Momentübertragung in dem ersten Typ der Werkzeugaufnahme, nämlich der Formschlussaufnahme. Dieses Überragen erfolgt wenigstens bereichsweise, also nicht notwendig über die gesamte Axialerstreckung des Einsetzschafts. Hierdurch werden zum Einen weitere Freiräume in der Ausgestaltung und in der Interoperabilität geschaffen, gleichzeitig aber ein möglichst weiter Bereich zum Spannen im Dreibackenspannfutter bereitgestellt.

In einer weiteren bevorzugten Ausführungsform weist mindestens einer der Mitnahmestege mindestens eine Axialunterbrechung zur Axialverriegelung auf. Ähnlich wie bei bekannten SDS-Plus-Werkzeugaufnahmen erfolgt eine Axialverriegelung durch in Radialrichtung wirkendes Eingreifen eines Axialverriegelungselements. Um den kreisförmigen Querschnitt des Einsetzschafts nicht mit zu einem solchen Eingriff geeigneten Ausnehmungen versehen zu müssen, was das Spannen in Dreibackenspannfuttern erschwert oder, je nach Anordnung, unmöglich macht, ist die Axialunterbrechung wenigstens eines der Mitnahmestege vorgesehen. In diese Axialunterbrechung greift das Axialverriegelungselement in der Formschlussaufnahme ein, wodurch ein Herausgleiten des Rotationswerkzeugs aus der Werkzeugaufnahme in Axialrichtung verhindert wird. Prinzipiell ist eine einzige derartige Axialunterbrechung ausreichend, vorteilhaft ist aber die Anbringung einer Axialunterbrechung in beiden Mitnahmestegen, da der Bediener der elektrischen Handwerkzeugmaschine in einem solchen Fall nicht auf das lagerichtige Einsetzen des Rotationswerkzeugs in die Werkzeugaufnahme achten muss, sondern dieses in beliebiger Weise in die entsprechende Formschlussaufnahme einsetzen kann, sofern lediglich die Mitnahmestege in hierfür vorgesehene Nuten eingreifen können.

In einer weiteren bevorzugten Ausführungsform ist der Durchmesser des Einsetzschafts im Bereich der Axialunterbrechung gleich dem Durchmesser in seinem mitnahmestegfreien Abschnitt. Der Einsetzschaft ist folglich durchgehend von kreisförmigem Querschnitt, wobei dieser kreisförmige Querschnitt lediglich an den hierfür vorgesehenen Stellen von den Mitnahmestegen überragt wird. Im Bereich der Axialunterbrechung stellt sich der Durchmesser des Einsetzschafts jedoch als unverändert kreisförmiger Querschnitt mit demselben Durchmesser wie im mitnahmestegfreien Abschnitt dar.

In einer anderen bevorzugten Ausführungsform ist vorgesehen, dass die Umfangsmantelfläche des Einsetzschaftes im Bereich der Mitnahmestege Mantelabschnitte aufweist, die, in Abweichung vom kreisrunden Querschnitt des Einsetzschaftes, im Wesentlichen flächig und im Wesentlichen quer zu den Mitnahmestegen ausgebildet ist. Der Einsetzschaft weist demzufolge im Bereich der Mitnahmestege keinen kreisrunden Querschnitt auf. Der Querschnitt erweist sich hier wenigstens abschnittsweise, beispielsweise entlang der Axialerstreckung der Mitnahmestege, als bereichsweise flächig, wobei diese Mantelflächen im Wesentlichen quer zu den Mitnahmestegen verlaufen. Der Kreisquerschnitt weist also beispielsweise unter den Mitnahmestegen Sekanten auf, auf denen die Mantelflächen ausgebildet sind und auf denen jeweils der Querschnitt der Mitnahmestege angeordnet ist. Diese Ausführungsform erlaubt einerseits einen noch wirksameren Formschluß bei nur geringfügig reduzierter Interoperabilität mit Dreibackenfuttern, und andererseits eine vereinfachte, sehr kostengünstige Herstellung beispielsweise durch Drücken der Mitnahmestege aus dem vollen Kreisquerschnitt.

In einer weiteren Ausführungsform sind im Bereich der Axialunterbrechung und/oder axial vor und/oder axial nach den Mitnahmestegen im Wesentlichen ebene Flächen in der Umfangsmantelfläche ausgebildet und/oder der Durchmesser des Einsetzschaftes ist kleiner als in seinem mitnahmestegfreien Bereich. Hier ist demzufolge der Durchmesser des Einsetzschaftes nicht durchgehend gleich, sondern im Bereich der Axialunterbrechung und/oder axial vor und/oder axial nach den Mitnahmestegen reduziert. Diese Durchmesserreduktion kann erfolgen durch Ausbildung von im Wesentlichen ebenen Flächen, die im Bereich der Axialunterbrechung angeordnet sind, und/oder vor und/oder nach den Mitnahmestegen liegen, oder durch nach wie vor kreisrunde Ausbildung des Einsetzschaftes auch in diesem Bereich, allerdings mit reduziertem Durchmesser. In dieser Ausführungsform können Verriegelungselemente der Formschlussaufnahme besser eingreifen, weil relativ zum Außendurchmesser des Einsetzschaftes eine Vertiefung entsteht, wodurch ein verbesserter Halt des Rotationswerkzeugs gegen axiales Herausgleiten aus der Formschlussaufnahme gewährleistet wird. Bevorzugt wird hierbei eine solche ebene Fläche so ausgebildet, dass sie, im Querschnitt des Rotationswerkzeugs betrachtet, auf einer Sekante aus dem Kreisquerschnitt des Einsetzschaftes liegt und im Wesentlichen parallel zur Drehachse des Rotationswerkzeuges sowie im Wesentlichen quer, insbesondere rechtwinklig, zur Symmetrieachse des Stegquerschnitts des Mitnahmestegs verläuft.

In einer weiteren bevorzugten Ausführungsform teilt die Axialunterbrechung den Mitnahmesteg in einen ersten und einen zweiten Axialstegabschnitt auf, wobei die Axialstegabschnitte unterschiedlich lang sind. Durch die unterschiedlich lange Ausgestaltung der Axialstegabschnitte kann die Axialunterbrechung an der Stelle angeordnet werden, die für die bestmögliche Interoperabilität insbesondere zwischen Formschlussaufnahme und Dreibackenspannfutter optimal ist, und wobei gleichzeitig eine einfache, kostengünstige und wirksame Anordnung der in die Axialunterbrechung eingreifenden Verriegelungselemente der Formschlussaufnahme gewährleistet ist.

In einer weiteren, bevorzugten Ausführungsform ist vorgesehen, dass der erste Axialstegabschnitt, von einem sich an den Einsetzschaft anschließenden Bearbeitungsbereich des Rotationswerkzeugs aus betrachtet, vor der Axialunterbrechung angeordnet ist und der zweite Axialstegabschnitt hinter der Axialunterbrechung angeordnet ist und der erste Axialstegabschnitt länger als der zweite Axialstegabschnitt ist. Der Mitnahmesteg weist demzufolge auf dem Umfang des Rotationswerkzeugs zwei Axialstegabschnitte auf, nämlich einen solchen, der dem Bearbeitungsbereich des Rotationswerkzeugs näher liegt, und einen solchen, der dem Bearbeitungsbereich entfernter und hinter der Axialunterbrechung angeordnet liegt. Der erste Axialstegabschnitt, nämlich derjenige, der dem Bearbeitungsbereich des Rotationswerkzeugs näher liegt, ist hierbei länger als der zweite Axialstegabschnitt ausgebildet. Durch eine solche Anordnung der Axialstegabschnitte lässt sich einerseits eine sehr gute Momentübertragung von der Werkzeugaufnahme als Formschlussaufnahme auf das Rotationswerkzeug bewirken, zum Anderen bietet sich eine große Freiheit in der Anordnung der Axialsicherung für das Rotationswerkzeug, die in die Axialunterbrechung eingreift. Bei der hier bevorzugten Ausbildung mit einem kürzeren zweiten Axialstegabschnitt kann die Sicherung bei auch nur kurzem Eingreifen in die Formschlussaufnahme wirken, wobei die Werkzeugaufnahme als solche relativ schmal, insbesondere zu ihrem dem Rotationswerkzeug und dessen Bearbeitungsbereich zugewandten Ende ausgebildet sein kann, weil die Anordnung der Axialsicherung in der Werkzeugaufnahme näher zum Motorteil liegen kann.

In einer weiteren Ausführungsform ist vorgesehen, dass der Durchmesser des Einsetzschafts zwischen 4 mm und 8 mm, bevorzugt zwischen 6,5 mm und 7 mm liegt. In diesen Bereichen sind die gebräuchlichsten Bohrer- und Dübelgrößen vorzufinden. Das Werkzeugsystem ist in Hinblick auf diese gebräuchlichsten Bohrer- und Dübelgrößen optimiert.

In einer besonders bevorzugten Ausführungsform wird die Kollisionsfreiheit der Mitnahmestege mit Spannbacken des Dreibackenspannfutters dadurch sichergestellt, dass das Rotationswerkzeug einen Stegradius A aufweist, der sich von einer Drehachse des Rotationswerkzeugs bis zur Oberseite des Mitnahmestegs erstreckt, und einen Radius R, der sich auf den kreisförmigen Querschnitt des Einsetzschafts im Bereich des Mitnahmestegs bezieht, und eine Mitnahmestegbreite M, die sich zwischen den sich gegenüberliegenden Mitnahmeflanken des Mitnahmestegs erstreckt, und wobei sich deren Hälfte als Mitnahmesteghalbbreite B ergibt, und wobei die geometrische Beziehung gilt:

$$B < R - \tan 30° \times A.$$

Die Mitnahmestegbreite M ergibt sich also dadurch in Abhängigkeit von der maximalen Erhöhung des Mitnahmestegs über dem kreisförmigen Durchmesser des Einsetzschafts (bezogen auf die Drehachse als Stegradius A), dass deren Hälfte, nämlich die Mitnahmesteghalbbreite B kleiner ist als der Radius R abzüglich des Stegradius A mal Tangens aus 30°. Weiter gilt in Umformung dieser geometrischen Beziehung, dass der Stegradius A kleiner sein muss als der Radius R abzüglich der Mitnahmesteghalbbreite B, dividiert durch den Tangens von 30°. Oder, in Anwendung von gerundeten Zahlbeispielen, lässt sich die Mitnahmesteghalbbreite B errechnen als Radius R minus Stegradius A mal 0,577. Unter Zugrundelegung dieser geometrischen Verhältnisse kollidieren die Mitnahmestege nicht mit den Spannbacken von Dreibackenspannfuttern. Es kann hierdurch nämlich sichergestellt werden, dass sich die Außenkanten der Mitnahmestege stets in einem von den Spannbacken des Dreibackenspannfutters nicht beanspruchten Bereich des Dreibackenspannfutters befinden, und möglicherweise zwar an Seitenflanken des Spannbackens anliegen, aber nicht in einer solchen Art und Weise, dass das zentrische Spannen des Einsetzschafts zwischen den drei Spannbacken des Dreibackenspannfutters erschwert oder unmöglich gemacht wird. Diese geometrische Beziehung weist ferner den Vorteil auf, dass die Mitnahmestege auch bei Spannung im Dreibackenspannfutter einen unerwünschten Schlupf des Rotationswerkzeugs innerhalb des Dreibackenspannfutters unter Last verhindern, weil sich die Mitnahmestege an Seitenflanken der Spannbacken anlegen. Ein unerwünschtes Durchrutschen wird somit vermieden.

Näheres zeigen die Ausführungsbeispiele, in denen insbesondere auch diese geometrischen Beziehungen weiter erläutert werden. Weitere vorteilhafte Ausführungsformen ergeben sich aus den Unteransprüchen und aus Kombinationen derselben.

Die Erfindung wird nachfolgend anhand von Ausführungsbeispielen näher erläutert, ohne dass die Erfindung jedoch hierauf beschränkt wäre.

**Kurze Beschreibung der Zeichnungen**

Es zeigen

Figur 1    ein Rotationswerkzeug mit Einsetzschaft;

Figur 2    eine schematisch dargestellte erste Werkzeugaufnahme, die als Formschussaufnahme für den Einsetzschaft ausgebildet ist;

Figur 3    eine geometrische Darstellung des Einsetzschaftes in einer als Dreibackenspannfutter ausgebildeten weiteren Werkzeugaufnahme, und

Figur 4    eine weitere Ausführungsform des Einsetzschaftes mit flächigen Mantelabschnitten.

**Ausführungsform(en) der Erfindung**

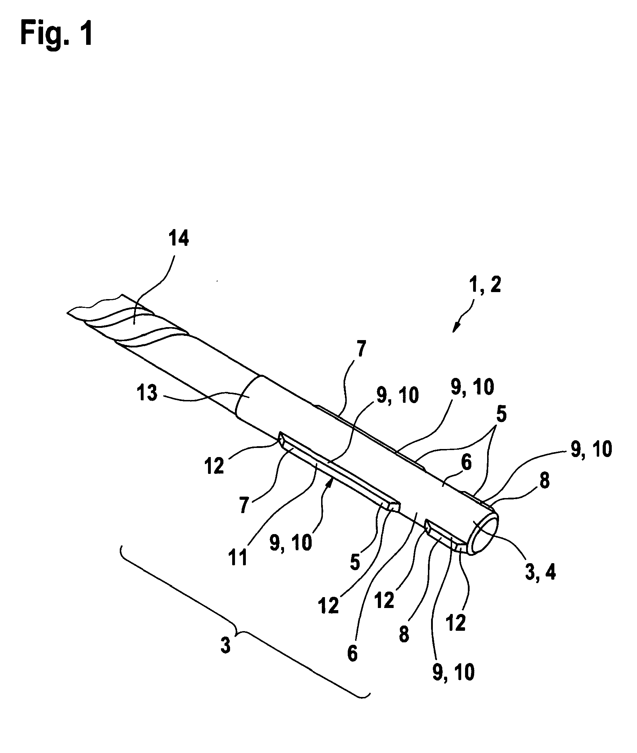

Figur 1 zeigt ein Rotationswerkzeug 1, nämlich einen Bohrer 2 zum Einsatz in einer hier nicht dargestellten elektrischen Handwerkzeugmaschine, wozu das Rotationswerkzeug 1 einen Einsetzschaft 3 aufweist, der zur Aufnahme des Rotationswerkzeugs 1 in einer nicht dargestellten Werkzeugaufnahme dient. Der Einsetzschaft 3 ist als SDS-Mini-Einsetzschaft 4 ausgebildet. Dieser weist über seinem kreisförmigen Querschnitt sich diametral gegenüberliegende, axial erstreckte Mitnahmestege 5 auf, die jeweils eine Axialunterbrechung 6 aufweisen, die jeden Mitnahmesteg 5 in einen längeren ersten Axialstegabschnitt 7 und in einen nach der Axialunterbrechung endseitig des Rotationswerkzeugs ausgerichteten kürzeren zweiten Axialstegabschnitt 8 aufteilt. Die Mitnahmestege 5 weisen sich an jedem Mitnahmesteg 5 gegenüberliegende Längsseiten 9 auf, die Mitnahmeflanken 10 bilden. Zwischen den Längsseiten 9 sind, die Mitnahmestege 5 nach außen und oben abschließend, Oberseiten 11 angeordnet. Die Mitnahmeflanken 10 schließen mit den Oberseiten 11 im Wesentlichen einen rechten Winkel ein, wodurch die Mitnahmeflanken 10 im Wesentlichen parallel zueinander verlaufen. Die Mitnahmeflanken 10 haben vorder- und endseitig sowie an die Axialunterbrechung 6 anschließend Stirnseiten 12, die mit der Oberseite 11 einen stumpfen Winkel dergestalt einschließen, dass sie einen An- beziehungsweise Auslauf der Oberseite 11 zur Umfangsmantelfläche 13 des Einsetzschafts 3 ausbilden. Hierdurch ist ein Einsetzen beziehungsweise Herausnehmen aus der entsprechenden, hier nicht dargestellten Werkzeugaufnahme besonders leicht möglich und in der Handhabung die Verletzungsgefahr für einen Benutzer an scharfen Kanten verringert. An den Einsetzschaft 3 schließt sich in Axialerstreckung des Rotationswerkzeugs 1 ein Bearbeitungsbereich 14 an, der zum Bearbeiten eines nicht dargestellten Werkstücks dient.

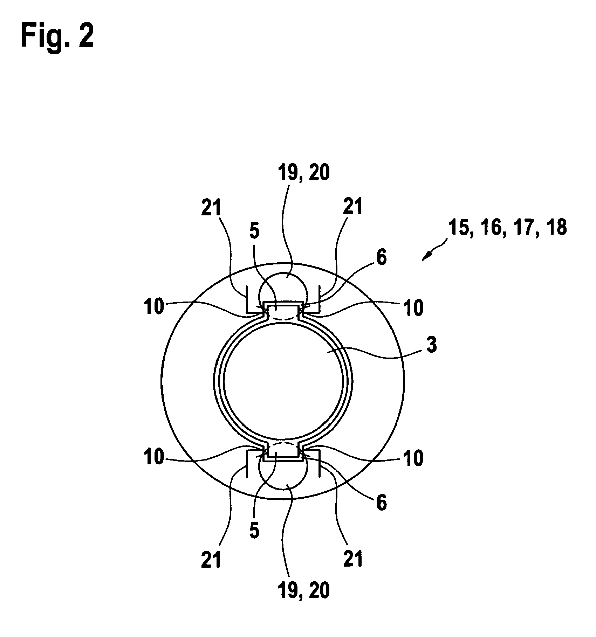

Figur 2 zeigt eine Werkzeughalterung 15, nämlich einen ersten Typ 16 einer Werkzeugaufnahme 17, die als Formschlussaufnahme 18 ausgebildet ist. Diese ist zur Aufnahme des in Figur 1 beschriebenen SDS-Mini-Einsetzschafts 4 vorgesehen. Sie weist eine beispielsweise aus zwei Sperrkugelvorrichtungen 19 aufgebaute Axialsicherung 20 auf, die in die in Figur 1 dargestellte Axialunterbrechung 6 eines jeden Mitnahmestegs 5 des Einsetzschafts 3 eingreift und diesen am axialen Herausgleiten aus der Werkzeughalterung 15 hindert. Gleichzeitig weist die Werkzeughalterung 15 Drehmomentübertrager 21 auf, die seitlich an den Mitnahmestegen 5 angreifen, nämlich an deren Mitnahmeflanken 10. Hierdurch wird eine Momentübertragung zwischen der Werkzeugaufnahme 17 und dem Einsetzschaft 3 bewirkt.

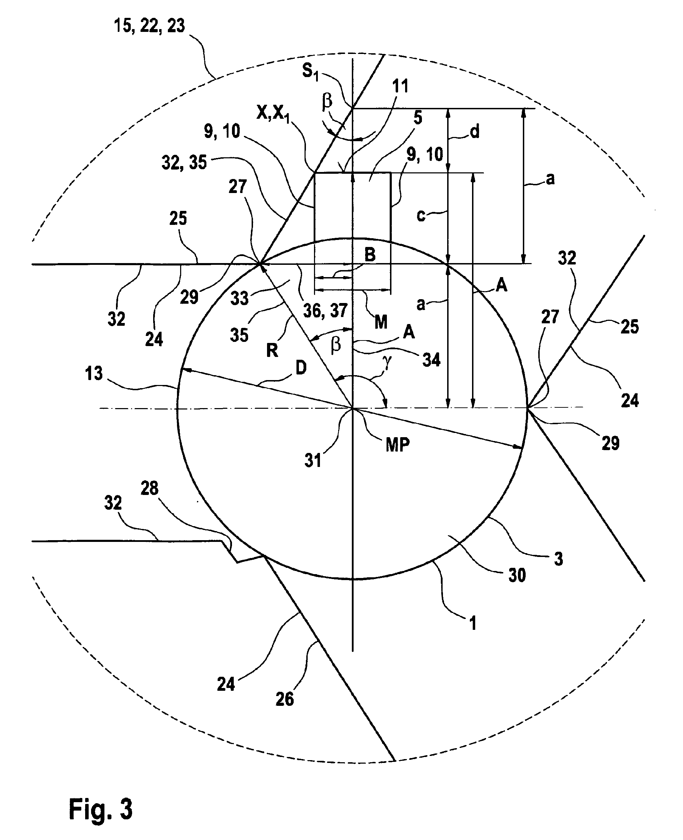

Figur 3 zeigt das Rotationswerkzeug 1, dessen Einsetzschaft 3 in einer Werkzeughalterung 15 eines zweiten Typs 22, nämlich einem Dreibackenspannfutter 23 eingespannt ist. Dieses weist drei Spannbacken 24 auf, die als bis auf Null schließende Vollschließungsspannbacken 25 oder als nicht bis auf Null schließende Abstandsspannbacken 26 ausgebildet sein können. Der Einfachheit halber sind in der vorliegenden Darstellung zwei Vollschließungsspannbacken 25 und ein Abstandsspannbacken 26 dargestellt, wobei selbstverständlich in einem Dreibackenspannfutter 23 lediglich drei Spannbacken jeweils derselben Art vorkommen, nämlich entweder als Vollschließungsspannbacken 25, die ab 0 mm spannen, also gewissermaßen beliebig kleine Durchmesser, oder aber als Abstandsspannbacken 26, die erst ab einem gewissen Mindestdurchmesser spannen. Vollschließungsspannbacken 25 weisen zum Spannen eine im Wesentlichen linear axialerstreckte Spannkante 27 auf, während Abstandsspannbacken 26 eine längserstreckte Spannnut 28 aufweisen. Bei Ausbildung einer Spannnut 28 an Abstandsspannbacken 26 ergeben sich pro Spannbacken 24 zwei Berührlinien 29 auf der Umfangsmantelfläche 13 des Einsetzschafts 3, während bei Vollschließungsspannbacken 25 lediglich eine Spannkante 27 als eine Berührlinie 29 auf der Umfangsmantelfläche 13 des Einsetzschafts 3 existiert. Es sind auch andere Ausführungsformen von Abstandsspannbacken 26 bekannt, die zwar eine Spannnut 28 besitzen, aber aufgrund von deren Lage und Spannweise mit jeweils nur einer Kante der Spannnut 28 den Einsetzschaft 3 berühren, so dass auch hier effektiv wiederum nur eine einzelne Spannkante 27 pro Spannbacken 24 vorliegt und demzufolge auch hier nur eine Berührlinie 29 vorliegt. Insbesondere sind auch (hier nicht dargestellte) Abstandsspannbacken 26 bekannt, die eine Spannfläche statt einer Spannnut 28 aufweisen.

Der Einfachheit und besseren Übersicht halber ist am vorliegenden Einsetzschaft 3 lediglich ein Mitnahmesteg 5 dargestellt.

Zwischen den Spannbacken 24 respektive den Berührlinien 29 der Vollschließungsspannbacken 25 (die für die Zwecke dieser Darstellung allein betrachtet werden) eingeschlossen ist ein Winkel $\gamma$ von 120°, da die Spannbacken 24 respektive ihre Berührlinie 29 auf der Umfangsmantelfläche 13 zur Ausbildung einer bestimmten Fixierung des Einsetzschafts 3 gleich winkelbeabstandet im Kreis angeordnet sind. Der Einsetzschaft 3 weist einen Radius R auf, der sich auf seinem kreisförmigen Querschnitt 30 zwischen dessen Mittelpunkt MP beziehungsweise auf eine Drehachse 31 und der Umfangsmantelfläche 13 des Einsetzschafts 3 erstreckt. Durch den Mittelpunkt MP verläuft gleichzeitig der Durchmesser D des Einsetzschafts 3, der sich als zwei mal Radius R ergibt. Zwischen der Drehachse 31 respektive dem Mittelpunkt MP und der Oberseite 11 des Mitnahmestegs 5 ergibt sich ein Stegradius A. Weiter ergibt sich eine Mitnahmestegbreite M als Abstand zwischen den Längsseiten 9 beziehungsweise Mitnahmeflanken 10 des Mitnahmestegs 5. Die Hälfte der Mitnahmestegbreite M ist die Mitnahmesteghalbbreite B, die sich so ergibt, dass die Mitnahmestegbreite M von dem Stegradius A mittig geteilt wird. Damit die Spannbacken 24 mit ihren Seitenflanken 32 nicht mit den zwischen Oberseite 11 und Längsseiten 9 der Mitnahmestege 5 befindlichen Kanten X kollidieren, hier anhand der Kante $X_1$ des Mitnahmestegs 5 dargestellt, gilt folgende geometrische Beziehung:

Mitnahmesteghalbbreite B < Radius R - Tangens 30° x Stegradius A.

Der Winkel β von 30° ergibt sich als zwischen der Seitenflanke 32 des Spannbackens 24 und der Verlängerung des Stegradius A über die Oberseite 11 des Mitnahmestegs 5 hinaus. Gängige Dreibackenspannfutter 23 weisen eine derartige Flankengeometrie auf. Der Winkel wiederholt sich zwischen dem Stegradius A und dem Radius R, wobei der Radius R auf die Spannkante 27 des Spannbackens 24 bezogen ist. Es ergibt sich hierdurch ein gleichschenkliges Dreieck 33, über dessen Basis 34 und zwischen dessen Schenkeln 35 als Sekante 36 ab der Spannkante 27 eine Höhe 37 des gleichschenkligen Dreiecks 33 anliegt. Die Sekante 36 ergibt bis zum Schnittpunkt $S_1$ der Verlängerung des Stegradius A in die Flanke 32 des Spannbackens 24 die Strecke a, die sich in die Sekantenhöhe c aufteilt, die sich als Abstand zwischen Oberseite 11 und Sekante 36 ergibt und den Freiraum d zwischen der Oberseite 11 und dem Schnittpunkt $S_1$. Hierbei ist die Strecke a gleich der Summe zwischen Sekantenhöhe c und Freiraum d. Der Abstand zwischen den Mittelpunkt MP und der Sekante 36 ist ebenfalls gleich der Strecke a. Hieraus ergeben sich als Grenzbedingungen dafür, dass Mitnahmestege 5 nicht mit Spannbacken 24 des Dreibackenspannfutters 23 kollidieren, folgende Grenzbedingungen:

$$\tan 30° = B \,/\, d,$$

woraus folgt:

$$B = \tan 30° \times d,$$

woraus sich ergibt

$$d = a - c$$

und

$$A = a + c$$

sowie

$$c = A - a.$$

Der Cosinus aus 30° ergibt sich als a / R. In rechnerischer Anwendung lässt sich dadurch die Mitnahmesteghalbbreite B ermitteln als Radius R - Stegradius A x Tangens 30°, beziehungsweise in gerundeten Werten als Radius R - 0,577 x Stegradius A.

Bei Einsatz von Abstandsspannbacken 26 ist der Stegquerschnitt der Mitnahmestege 5 noch etwas kleiner als dargestellt auszubilden, um den vielfachen Bauformen der Abstandsspannbacken 26 Rechnung tragen zu können. Insbesondere ist in ungünstigen Fällen denkbar, dass der Mitnahmesteg 5 an seiner Kante $X_1$ mit der Flanke 32 eines Abstandsspannbackens 26 kollidiert, wenn obige Grenzbedingungen vollständig ausgenutzt sind, abhängig von der tatsächlichen Ausgestaltung des Abstandsspannbackens 26. Aus diesem Grunde sind für einen sicher kollisionsfreien Einsatz die Mitnahmestegbreite M und/oder die Sekantenhöhe c gegenüber den oben für Vollschließungsspannbacken 25 dargestellten Grenzbedingungen noch einmal (geringfügig) zu reduzieren.

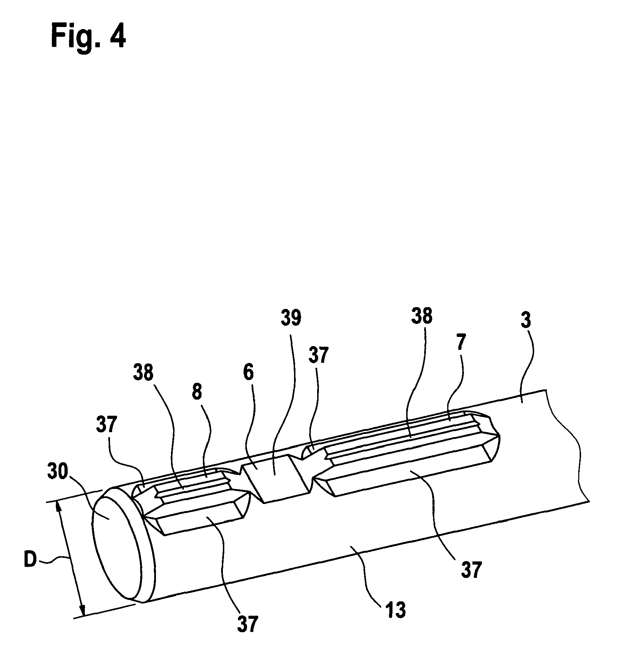

Figur 4 zeigt eine weitere Ausführungsform des Einsetzschaftes 3 mit dem ersten Axialstegabschnitt 7 und dem zweiten Axialstegabschnitt 8. Links und rechts - in Axialrichtung betrachtet - der Axialstegabschnitte 7, 8 sind ebene Mantelabschnitte 37 in der Umfangsmantelfläche 13 ausgebildet, die im Wesentlichen quer zu den Axialstegabschnitten 7, 8 verlaufen. In diesem Bereich weist der Einsetzschaft 3 keinen kreisrunden Querschnitt 30 mit dem Durchmesser D auf, sondern die Umfangsmantelfläche 13 ist zur Ausbildung der Mantelabschnitte 37 vertieft. Die Mantelabschnitte 37 lassen sich im Zuge der Herstellung der Axialstegabschnitte 7, 8 aus dem runden Vollmaterial des Einsetzschaftes 3 gewinnen, indem die Axialstegabschnitte aus dem runden Vollmaterial gedrückt werden. Hierbei kommt es zu einer Materialverlagerung, die die Vertiefungen der Mantelabschnitte 37 durch Verlagern von ursprünglich dort befindlichem Vollmaterial in den Bereich der hierdurch ausgebildeten Axialstegabschnitte 7, 8 hinein bewirkt. Die gesamte Kontur des Einsetzschaftes 3 kann demzufolge in einem einfachen Press- oder Drückvorgang hergestellt werden. Durch von beiden Seiten erfolgendes Drücken und die hierdurch bedingte Materialverlagerung ergeben sich oberseitig der Axialstegabschnitte 7, 8 Fließlinien 38, die beispielsweise als weitere Führungsnuten genutzt werden können. Zwischen den Axialstegabschnitten 7, 8 angeordnet ist die Axialunterbrechung 6, die als ebene Fläche 39 ausgebildet ist, dergestalt, dass sie gegenüber der Umfangsmantelfläche 13 abgesenkt und in ihrem Verlauf quer zu den Axialstegabschnitten 7, 8 ist. Durch die Ausbildung der ebenen Fläche 39 kann die hier nicht dargestellte Axialsicherung 20 besser eingreifen, die Überdeckung zwischen Einsetzschaft 3 und Axialsicherung 20 wird demzufolge größer, die Wirksamkeit der Axialsicherung 20 demzufolge erhöht.

**Patentansprüche**

1.  Werkzeugsystem mit einem auswechselbaren Rotationswerkzeug (1) für elektrische Handwerkzeugmaschinen, vorzugsweise mit Bohr- und/oder Hammerfunktion, insbesondere für einen elektrischen Bohrhammer, und eine elektrische Bohrmaschine, insbesondere Schlagbohrmaschine, und mit mindestens zwei Werkzeughalterungen (15) als Werkzeugaufnahme (17), die den Handwerkzeugmaschinen zugeordnet und unterschiedlichen Typs (16,22) sind, wobei das Rotationswerkzeug (1) einen Einsetzschaft (3) für die Aufnahme in der jeweiligen Werkzeughalterung (15) der Handwerkzeugmaschinen aufweist, der mindestens zwei entlang seiner Längserstreckung verlaufende, einander diametral gegenüberliegende Mitnahmestege (5) für eine Drehmitnahme aufweist, wobei die Werkzeugaufnahme (17) als Formschlussaufnahme (18) als ein erster Typ (16) und eine weitere Werkzeugaufnahme (17) als Mehrbackenspannfutter (23) als ein zweiter Typ (22) ausgebildet sind und wobei die Mitnahmestege (5) derart breit und derart hoch ausgebildet sind, dass sie - im eingespannten Zustand - von den Spannbacken (24) des Mehrbackenspannfutters (23) einen seitlichen Abstand aufweisen.

2.  Werkzeugsystem nach Anspruch 1, **dadurch gekennzeichnet, dass** der Einsetzschaft (3) genau zwei Mitnahmestege (5) aufweist.

3.  Werkzeugsystem nach einem der vorhergehenden Ansprüche, **dadurch gekennzeichnet, dass** der Mitnahmesteg (5) einen im Wesentlichen quadratisch oder rechteckig ausgebildeten Stegquerschnitt aufweist.

4.  Werkzeugsystem nach einem der vorhergehenden Ansprüche, **dadurch gekennzeichnet, dass** der Stegquerschnitt im Wesentlichen trapezförmig ausgebildet ist.

5.  Werkzeugsystem nach einem der vorhergehenden Ansprüche, **dadurch gekennzeichnet, dass** der Stegquerschnitt im Wesentlichen spiegelsymmetrisch zu einer als Verlängerung eines Radius (R) des Einsetzschaftes (3) gebildeten, durch den Stegquerschnitt verlaufenden Symmetrieachse ist.

6.  Werkzeugsystem nach einem der vorhergehenden Ansprüche, **dadurch gekennzeichnet, dass** die Mitnahmestege (5) Längsseiten (9) aufweisen, die ebene Mitnahmeflanken (10) bilden.

7.  Werkzeugsystem nach einem der vorhergehenden Ansprüche, **dadurch gekennzeichnet, dass** die Längsseiten (9) jedes Mitnahmesteges (5) parallel zueinander verlaufen.

8.  Werkzeugsystem nach einem der vorhergehenden Ansprüche, **dadurch gekennzeichnet, dass** die Längsseiten (9) jedes Mitnahmesteges (5) im Wesentlichen radial auf einer Umfangsmantelfläche (13) des Einsetzschaftes (3) verlaufen.

9.  Werkzeugsystem nach einem der vorhergehenden Ansprüche, **dadurch gekennzeichnet, dass** der Einsetzschaft (3) einen kreisförmigen Querschnitt (30) aufweist, der zumindest bereichsweise von den Mitnahmestegen (5) überragt wird.

10. Werkzeugsystem nach einem der vorhergehenden Ansprüche, **dadurch gekennzeichnet, dass** die Umfangsmantelfläche (13) des Einsetzschaftes (3) im Bereich der Mitnahmestege (5) Mantelabschnitte (37) aufweist, die, in Abweichung vom kreisrunden Querschnitt (30) des Einsetzschaftes (3), im Wesentlichen flächig und im Wesentlichen quer zu den Mitnahmestegen (5) ausgebildet sind.

11. Werkzeugsystem nach einem der vorhergehenden Ansprüche, **dadurch gekennzeichnet, dass** mindestens einer der Mitnahmestege (5) mindestens eine Axialunterbrechung (6) zur Axialverriegelung aufweist.

12. Werkzeugsystem nach einem der vorhergehenden Ansprüche, **dadurch gekennzeichnet, dass** der Durchmesser (D) des Einsetzschaftes (3) im Bereich der Axialunterbrechung (6) gleich dem Durchmesser in seinem mitnahmestegfreien Abschnitt ist.

13. Werkzeugsystem nach einem der vorhergehenden Abschnitte, **dadurch gekennzeichnet, dass** im Bereich der Axialunterbrechung (6) und/oder axial vor und/oder axial nach den Mitnahmestegen (5) im Wesentlichen ebene Flächen (39) in der Umfangsmantelfläche (13) ausgebildet sind und/oder der Durchmesser (D) des Einsetzschaftes (3) kleiner als in seinem mitnahmestegfreien Bereich ist.

14. Werkzeugsystem nach einem der vorhergehenden Ansprüche, **dadurch gekennzeichnet, dass** die Axialunterbrechung (6) den Mitnahmesteg (5) in einen ersten und einen zweiten Axialstegabschnitt (7,8) aufteilt, wobei die Axialstegabschnitte (7,8) eine unterschiedliche Länge aufweisen.

15. Werkzeugsystem nach einem der vorhergehenden Ansprüche, **dadurch gekennzeichnet, dass** der erste Axialstegabschnitt (7), von einem sich an dem Einsetzschaft (3) anschließenden Bearbeitungsbereich (14) des Rotationswerkzeugs (1) aus betrachtet, vor der Axialunterbrechung (6) angeordnet ist und der zweite Axialstegabschnitt (8) hinter der Axialunterbrechung (6) angeordnet ist und der erste Axialstegabschnitt (7) länger als der zweite Axialstegabschnitt (8) ist.

16. Werkzeugsystem nach einem der vorhergehenden Ansprüche, **dadurch gekennzeichnet, dass** der Durchmesser (D) des Einsetzschafts (3) zwischen 4 mm und 8 mm, bevorzugt zwischen 6,5 mm und 7 mm liegt.

17. Werkzeugsystem nach einem der vorhergehenden Ansprüche, **dadurch gekennzeichnet, dass** das Rotationswerkzeug (1) einen Stegradius (A) aufweist, der sich von einer Drehachse (31) des Rotationswerkzeugs (1) bis zur Oberseite des Mitnahmestegs (5) erstreckt, und einen Radius (R), der sich auf den kreisförmigen Querschnitt (30) des Einsetzschafts (3) im Bereich des Mitnahmestegs (5) bezieht, und eine Mitnahmestegbreite (M), die sich zwischen den sich gegenüberliegenden Mitnahmeflanken (10) des Mitnahmestegs (5) erstreckt, und wobei sich deren Hälfte als Mitnahmesteghalbbreite (B) ergibt, wobei die geometrische Beziehung gilt:

$$B < R - \tan 30° \times A.$$

18. Werkzeugsystem nach einem der vorhergehenden Ansprüche, **dadurch gekennzeichnet, dass** das Rotationswerkzeug (1) mittels eines spanlosen Pressvorgangs hergestellt ist.

19. Werkzeugsystem nach einem der vorhergehenden Ansprüche, **dadurch gekennzeichnet, dass** das Mehrbackspannfutter (23) als ein Dreibackspannfutter ausgeführt ist.

## Claims

1. Tool system comprising an interchangeable rotary tool (1) for portable electric power tools, preferably with a drilling and/or hammer function, in particular for an electric hammer drill, and an electric drilling machine, in particular a percussion drilling machine, and comprising at least two tool holders (15) as tool receptacle (17) which are assigned to the portable power tools and are of different types (16, 22), wherein the rotary tool (1) has an insertion shank (3) for accommodating in the respective tool holder (15) of the portable power tools, said insertion shank (3) having at least two diametrically opposite driving webs (5), running in the longitudinal extent thereof, for rotary driving, wherein the tool receptacle (17) is designed as a positive-locking receptacle (18) as a first type (16) and a further tool receptacle (17) is designed as a multi-jaw chuck (23) as a second type (22), and wherein the driving webs (5) are designed to be of such a width and such a height that, in the clamped state, they are at a lateral distance from the chuck jaws (24) of the multi-jaw chuck (23).

2. Tool system according to Claim 1, **characterized in that** the insertion shank (3) has exactly three driving webs (5).

3. Tool system according to either of the preceding claims, **characterized in that** the driving web (5) has a substantially square or rectangular web cross section.

4. Tool system according to one of the preceding claims, **characterized in that** the web cross section is designed to be substantially trapezoidal.

5. Tool system according to one of the preceding claims, **characterized in that** the web cross section is substantially mirror-symmetrical relative to an axis of symmetry formed as an extension of a radius (R) of the insertion shank (3) and passing through the web cross section.

6. Tool system according to one of the preceding claims, **characterized in that** the driving webs (5) have longitudinal sides (9) which form flat driving flanks (10) .

7. Tool system according to one of the preceding claims, **characterized in that** the longitudinal sides (9) of each driving web (5) run parallel to one another.

8. Tool system according to one of the preceding claims, **characterized in that** the longitudinal sides (9) of each driving web (5) run substantially radially on a circumferential lateral surface (13) of the insertion shank (3).

9. Tool system according to one of the preceding claims, **characterized in that** the insertion shank (3) has a circular cross section (30), beyond which the driving webs (5) project at least in certain regions.

10. Tool system according to one of the preceding claims, **characterized in that** the circumferential lateral surface (13) of the insertion shank (3) has, in the region of the driving webs (5), lateral surface sections (37) which, in deviation from the circular cross section (30) of the insertion shank (3), are formed in a substantially planar manner and substantially transversely to the driving webs (5).

11. Tool system according to one of the preceding claims, **characterized in that** at least one of the driving webs (5) has at least one axial interruption (6) for axial locking.

12. Tool system according to one of the preceding claims, **characterized in that** the diameter (D) of the insertion shank (3) in the region of the axial interruption (6) is equal to the diameter in the section in which it is free of driving webs.

13. Tool system according to one of the preceding claims, **characterized in that**, in the region of the axial interruption (6) and/or axially in front of and/or axially behind the driving webs (5), substantially flat surfaces (39) are formed in the circumferential lateral surface (13) and/or the diameter (D) of the insertion shank (3) is less than in the region in which it is free of driving webs.

14. Tool system according to one of the preceding claims, **characterized in that** the axial interruption (6) divides the driving web (5) into a first and a second axial web section (7, 8), the axial web sections (7, 8) having different lengths.

15. Tool system according to one of the preceding claims, **characterized in that**, as viewed from a machining region (14) of the rotary tool (1) adjoining the insertion shank (3), the first axial web section (7) is arranged in front of the axial interruption (6) and the second axial web section (8) is arranged behind the axial interruption (6), and the first axial web section (7) is longer than the second axial web section (8).

16. Tool system according to one of the preceding claims, **characterized in that** the diameter (D) of the insertion shank (3) is between 4 mm and 8 mm, preferably between 6.5 mm and 7 mm.

17. Tool system according to one of the preceding claims, **characterized in that** the rotary tool (1) has a web radius (A), which extends from a rotation axis (31) of the rotary tool (1) up to the top side of the driving web (5), and a radius (R), which relates to the circular cross section (30) of the insertion shank (3) in the region of the driving web (5), and a driving web width (M), which extends between the opposite driving flanks (10) of the driving web (5), and wherein the half thereof appears as driving web half-width (B), wherein the geometrical relationship is:

$$B < R - \tan 30° \times A.$$

18. Tool system according to one of the preceding claims, **characterized in that** the rotary tool (1) is produced by means of a non-cutting pressing operation.

19. Tool system according to one of the preceding claims, **characterized in that** the multi-jaw chuck (23) is embodied as a three-jaw chuck.

**Revendications**

1. Système d'outil comprenant un outil rotatif interchangeable (1) pour des machines-outils à main électriques, de préférence avec une fonction de perceuse et/ou de marteau, en particulier pour un marteau perforateur électrique, et une perceuse électrique, en particulier une perceuse à percussion, et comprenant au moins deux supports d'outils (15) servant de porte-outil (17), qui sont associés aux machines-outils à main et sont de types différents (16, 22), l'outil rotatif (1) présentant une tige d'insertion (3) devant être reçue dans le support d'outil respectif (15) des machines-outils à main, laquelle tige d'insertion présente au moins deux nervures d'entraînement (5) diamétralement opposées pour un entraînement en rotation, s'étendant le long de son étendue longitudinale, le porte-outil (17) étant réalisé sous forme de logement à engagement par coopération de forme (18) en tant que premier type (16) et un autre porte-outil (17) étant réalisé sous forme d'un mandrin de serrage à mâchoires multiples (23) en tant que deuxième type (22), et les nervures d'entraînement (5) étant réalisées avec une largeur et une hauteur telles qu'elles présentent, dans l'état serré, un espacement latéral par rapport aux mâchoires de serrage (24) du mandrin de serrage à mâchoires multiples (23).

2. Système d'outil selon la revendication 1, **caractérisé en ce que** la tige d'insertion (3) présente exactement deux nervures d'entraînement (5).

3. Système d'outil selon l'une quelconque des revendications précédentes, **caractérisé en ce que** la nervure d'entraînement (5) présente une section transversale de nervure réalisée sensiblement sous forme carrée ou rectangulaire.

4. Système d'outil selon l'une quelconque des revendications précédentes, **caractérisé en ce que** la section transversale de nervure est réalisée sensiblement sous forme trapézoïdale.

5. Système d'outil selon l'une quelconque des revendications précédentes, **caractérisé en ce que** la section transversale de nervure a sensiblement une symétrie spéculaire par rapport à un axe de symétrie formé en tant que prolongement d'un rayon (R) de la tige d'insertion (3), s'étendant à travers la section transversale de la nervure.

6. Système d'outil selon l'une quelconque des revendications précédentes, **caractérisé en ce que** les nervures d'entraînement (5) présentent des côtés longitudinaux (9) qui forment des flancs d'entraînement plans (10).

7. Système d'outil selon l'une quelconque des revendications précédentes, **caractérisé en ce que** les côtés longitudinaux (9) de chaque nervure d'entraînement (5) s'étendent parallèlement les uns aux autres.

8. Système d'outil selon l'une quelconque des revendications précédentes, **caractérisé en ce que** les côtés longitudinaux (9) de chaque nervure d'entraînement (5) s'étendent sensiblement radialement sur une surface d'enveloppe périphérique (13) de la tige d'insertion (3).

9. Système d'outil selon l'une quelconque des revendications précédentes, **caractérisé en ce que** la tige d'insertion (3) présente une section transversale circulaire (30) qui dépasse au moins en partie des nervures d'entraînement (5).

10. Système d'outil selon l'une quelconque des revendications précédentes, **caractérisé en ce que** la surface d'enveloppe périphérique (13) de la tige d'insertion (3) présente dans la région des nervures d'entraînement (5) des portions d'enveloppe (37) qui sont réalisées sensiblement à plat et sensiblement transversalement aux nervures d'entraînement (5), en s'écartant de la section transversale ronde circulaire (30) de la tige d'insertion (3).

11. Système d'outil selon l'une quelconque des revendications précédentes, **caractérisé en ce qu'**au moins l'une des nervures d'entraînement (5) présente au moins une interruption axiale (6) pour le verrouillage axial.

12. Système d'outil selon l'une quelconque des revendications précédentes, **caractérisé en ce que** le diamètre (D) de la tige d'insertion (3) dans la région de l'interruption axiale (6) est égal au diamètre dans sa portion sans nervure d'entraînement.

13. Système d'outil selon l'une quelconque des revendications précédentes, **caractérisé en ce que** dans la région de l'interruption axiale (6) et/ou axialement avant et/ou axialement après les nervures d'entraînement (5), des faces sensiblement planes (39) sont réalisées dans la surface d'enveloppe périphérique (13), et/ou le diamètre (D) de la tige d'insertion (3) est inférieur à sa région exempte de nervure d'entraînement.

14. Système d'outil selon l'une quelconque des revendications précédentes, **caractérisé en ce que** l'interruption axiale (6) divise la .nervure d'entraînement (5) en une première et une deuxième portion de nervure axiale (7, 8), les portions de nervure axiale (7, 8) présentant une longueur différente.

15. Système d'outil selon l'une quelconque des revendications précédentes, **caractérisé en ce que** la première portion de nervure axiale (7), considérée depuis une région d'usinage (14) de l'outil rotatif se raccordant à la tige d'insertion (3), est disposée avant l'interruption axiale (6), et la deuxième portion de nervure axiale (8) est disposée derrière l'interruption axiale (6) et la première portion de nervure axiale (7) est plus longue que la deuxième portion de nervure axiale (8).

16. Système d'outil selon l'une quelconque des revendications précédentes, **caractérisé en ce que** le diamètre (D) de la tige d'insertion (3) est compris entre 4 mm et 8 mm, de préférence entre 6,5 mm et 7 mm.

17. Système d'outil selon l'une quelconque des revendications précédentes, **caractérisé en ce que** l'outil rotatif (1) présente un rayon de nervure (A) qui s'étend depuis un axe de rotation (31) de l'outil rotatif (1) jusqu'au côté supérieur de la nervure d'entraînement (5), et un rayon (R) qui se rapporte à une section transversale circulaire (30) de la tige d'insertion (3) dans la région de la nervure d'entraînement (5), et une largeur de nervure d'entraînement (M) qui s'étend entre les flancs d'entraînement (10) opposés l'un à l'autre de la nervure d'entraînement (5), et leur moitié correspondant à la moitié de la largeur de la nervure d'entraînement (B), la relation géométrique étant comme suit :

$$B < R - \tan 30° \times A.$$

18. Système d'outil selon l'une quelconque des revendications précédentes, **caractérisé en ce que** l'outil rotatif (1) est fabriqué au moyen d'une opération de pressage sans enlèvement de copeaux.

19. Système d'outil selon l'une quelconque des revendications précédentes, **caractérisé en ce que** le mandrin de serrage à mâchoires multiples (23) est réalisé sous forme de mandrin de serrage à trois mâchoires.

# Fig. 1

# Fig. 2

Fig. 3

# Fig. 4

**EP 2 205 384 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3982846 A

- DE 19604280 A1